# EUROPEAN PATENT SPECIFICATION

(11) **EP 3 802 073 B1**
(45) Date of publication and mention of the grant of the patent: **06.09.2023**
(21) Application number: 19745788.0
(22) Date of filing: 04.06.2019
(51) Int. Cl.: B29C 65/82, G01N 3/04, G01N 3/24, G01N 19/04

(54) **IMPROVEMENTS TO STEP BACK HEIGHT**
VERBESSERUNGEN AN DER PILGERSCHRITTHÖHE
AMÉLIORATIONS APPORTÉES À LA HAUTEUR DU RETOUR EN ARRIÈRE

(30) Priority: 04.06.2018 NL 2021048
(43) Date of publication of application: 14.04.2021
(73) Proprietor: Xyztec BV, 5981 XC Panningen (NL)
(72) Inventor: HOEFLAAK, Arjen, 5981 XC Panningen (NL); VAN MIL, Cornelis Bartholomeus Maria, 5981 XC Panningen (NL); SYKES, Robert John, 5981 XC Panningen (NL)
(74) Representative: Algemeen Octrooi- en Merkenbureau B.V.
(86) International application number: PCT/NL2019/050334
(87) International publication number: WO 2019/235924

(56) References cited:
- EP-A1- 2 363 701
- EP-A1- 2 363 702
- US-A1- 2008 190 212

## Description

Electrical connections in semiconductor and electronic assemblies often include bonds and it is known that these can be mechanically tested as a means of measuring their quality. One such test is done on a system known as a Bond Tester and is known as a shear test where a part of the bond tester known as a shear tool loads the bond to either a specific load or until a failure of some type occurs. The positional alignment accuracy of the tool to the bond is known to be of great importance and a number of designs exist to obtain the best accuracy possible. In line with the three dimensions of space there are three alignments of the tool. This invention pertains to one of these known as the "shear height" or associated "step back height". The accuracy of this alignment is the most important and often limited to that possible from the known technology, it is then advantageous to make improvements to it. This invention is a new design that improves the accuracy of the step back and the height of the tool when it performs the test which is known as the shear height.

US2008/0190212 A1 discloses a device for shear testing of very small protrusions of an electrical semi-conductor device including a sensor for detecting surface contact of a shear test tool. The lateral shear force transducer is also used to detect scrubbing forces as the tool is reciprocated on the substrate, so as to give accurate surface contact sensing of non-rigid substrates. After contact sensing, the test tool is stepped back to ensure the shear test is performed without dragging of the tool on the substrate. To achieve a test without dragging, the tool is iteratively moved upwards when a contact between the tool and the substrate is detected. According to paragraph [0050] thereof, the device disclosed in US2008/0190212 A1 does not have internal moving parts so that indeterminate friction and stiction forces are eliminated.

EP 2 363 702 A1 discloses a bond strength testing apparatus comprising a main body, a test tool mount for holding a test tool, an axial drive mechanism, preferably comprising a screw and nut assembly, the drive mechanism coupling the test tool mount to the main body and allowing for relative movement between the test tool mount and the main body in an axial direction, and a backlash control element, coupled to the main body and the test tool mount, that, in operation, biases the test tool mount relative to the main body in an axial direction. The backlash control element is switchable between a first state in which the test tool mount is biased in a first axial direction by the backlash control element, and a second state in which either the test tool is biased in a second axial direction by backlash control element, or the backlash control element applies no biasing force to test tool mount. The apparatus can be automated to apply the appropriate backlash control for a particular, selected test type. The apparatus disclosed in EP 2 363 702 A1 may perform pull tests and shear tests. The apparatus disclosed in EP 2 363 702 A1 comprises a screw and nut mechanism to drive the test tool upwards and downwards. In practice, some clearance exists between the upper thread surface of the nut and the thread surfaces of the screw. This results in an inaccuracy in determining the vertical height of the test tool. The backlash control element either pushes the screw up in the nut so that the screw surface contacts the upper surface of the nut grooves (when a pull test is to be carried out), or the backlash control element pushes the screw down in the nut so that the screw surface contacts the lower surface of the nut grooves (when a push test is to be carried out). The backlash control element can also be inactive.

EP 2 363 701 A1 discloses a shear test device for testing the strength of attachment between a bond and an electronic substrate. The device incorporates a clamping mechanism and a shear test tool that are mounted on a baseplate. During a set-up procedure, the shear test tool is movable relative to the baseplate. During a test procedure, the shear test tool is clamped by the clamping mechanism in a fixed position relative to the baseplate. At least one abutment is provided that is fixed in position relative to the baseplate. During the test procedure, a drive mechanism provides relative movement between the shear test tool and the bond to cause the shear test tool to shear the bond of the substrate. The at least one abutment provides an additional clamping force on the test tool while the test tool is shearing the bond off of the substrate. In the preferred embodiment, strain gauges associated with the shear test tool provide signals to an electric circuit indicating the strength of attachment between the bond and the substrate. According to paragraphs [0040] and [0041] thereof, a clamp piston 33 moves in a lateral direction to force it against shear beam body 22, preventing any movement in the Z direction so that no further movement of the cantilever arms 21, or shear tool 100, is possible.

### Summary

It is an object of the present disclosure to provide for a bond tester apparatus, as well as a corresponding method, which is able to accurately set the shear height of a shear tool.

In a first aspect of the present disclosure, there is provided a bond tester apparatus as defined by claim 1.

Preferably, said force measurement module comprises a shear sensor, connected to said shear tool, and arranged for measuring said applied shear force.

In the context of the present disclosure, the movable member may be formed in such a way that it acts as some sort of shock absorber. This entails that the movable member connects the movable rigid body to the force measurement module in such a way that the distance between these modules is kept constant. The movable member is then arranged to absorb a shock, i.e. the shear tool comes in contact with the base. The result hereof is that the displacement distance between the force measurement module and the displacement module becomes smaller.

The movable member is further formed in such a way that it can be controlled in such a way that the distance between the displacement module and the force measurement module can be controlled. It may thus operate as an active element by using a hydraulic or pneumatic principle, or anything alike.

The movable member, for example, comprises:
- a piston connected, at one end, to said force measurement module;
- an, in use, vertically expandable chamber, wherein said piston is connected, at another end, to an expandable part of said chamber;

- an inlet/outlet port for introducing, and removing, a fluid in, from, said expandable chamber for expanding, and shrink, said expandable chamber, thereby controlling said displacement distance between said displacement module and said force measurement module.

Features of the invention will be apparent from the following description with reference to the accompanying drawings in which:
Fig. 1 shows a schematic representation of a bond and a shear tool in the alignment position prior to testing the bond.
Fig. 2 shows a schematic representation of the invention and the components it is comprised of.
Figs. 3a to 3d show a schematic representation of the inventions sequence of operation in achieving the precise step back.

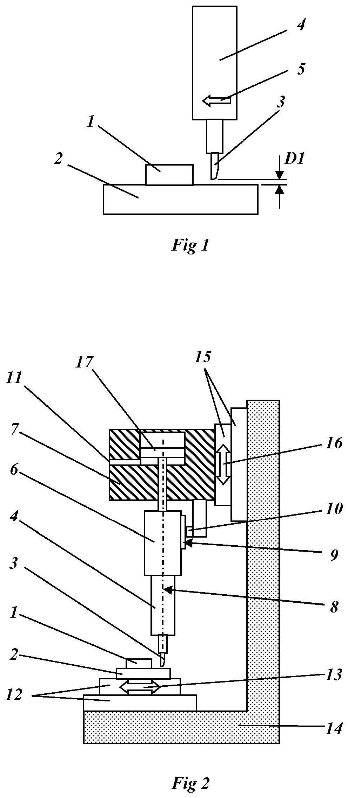

In the schematic representation Fig 1 electrical (or semiconductor) part 1 is bonded to a base or substrate 2, this being the bond to be tested. There are many different type of "electrical part" including but not limited to electrical packages, silicon chips, copper conductors and solder balls. There are also many different types of base including but not limited to FR4 or ceramic circuit boards and silicon chips. Shear tool 3 is mounted to body 4 which in most cases is a force measurement system. Shear tool 3 is aligned at step back distance D1 from base 2. Maintaining distance D1, the component and shear tool are then brought into contact in the direction of arrow 5 by a bond tester. The bond is tested when the tool collides with the electrical part 1, typically the force from the sensor is recorded together with the amount of movement in the direction of arrow 5 and the time taken. The quality of the bond is characterised by the force measurement and type of failure with in the bond, known as "Failure Mode". Within the known art the alignment accuracy of step back distance D1 is typically ±1µm. The invention can achieve this and substantially less.

Fig 2 shows a schematic representation of the invention and the components it is comprised of. Shear tool 3 and body/sensor 4 are rigidly mounted on to housing 6 which is in turn rigidly mounted to movable rigid body 7 but such that it is free to move within limits along line 8 relative to it. Line 8 being substantially normal to the plane of the top of base 2. The relative position of housing 6 to movable rigid body 7 is measured by a displacement sensor shown as components 9 and 10. The accuracy of the measurement of the relative distance between housing 6 and movable rigid body 7 along line 8 using sensor 9,10 should be in the order of 0.1 to 0.01µm. In a preferred embodiment of the invention, but not limited to it, this displacement sensor is a linear encoder with grating 9 and reading head 10. Housing 6 can be securely clamped to movable rigid body 7 by some means with it still moving along line 8, with submicron repeatability in the order of at least 0.1 µm along line 8 between successive clamps. A means of achieving this would be known to one skilled in such arts. In a preferred embodiment the clamping would be by supplying compressed air to piston 17 via port 11, pulling and then clamping housing 6 to movable rigid body 7.

Electrical part 1 and its base 2, when combined known as the "sample", are mounted on a movable "stage" 12 such that they can be moved relative to tool 3 along axis 13. A stage is known by one skilled in art as a component that produces precise linear movement along and axis, in this case axis 13. There may also be another axis perpendicular to the plane of Fig 2 so the electrical part and others like it can be moved to the test position of tool 3. Stage 12 is fixed to a main frame 14. Similarly Stage 15, also fixed to frame 14, can move movable rigid body 7 along axis 16. These stages combined can align/position tool 3 at many different positions relative to the sample. For the purpose of this invention stage 15 will have an accuracy along axis 16 of at least 0.1µm. For the purposes of this invention it is advantageous that tool 3 can be aligned to step back distance D1 and moved to the sample along axis 13. Fig 2 is a preferred embodiment but the invention includes alternatives that achieve the same with a different configuration, for example but not limited to, fixing the sample to frame 14 and providing movement of the tool along axis 13 by fixing stage 12 to stage 15.

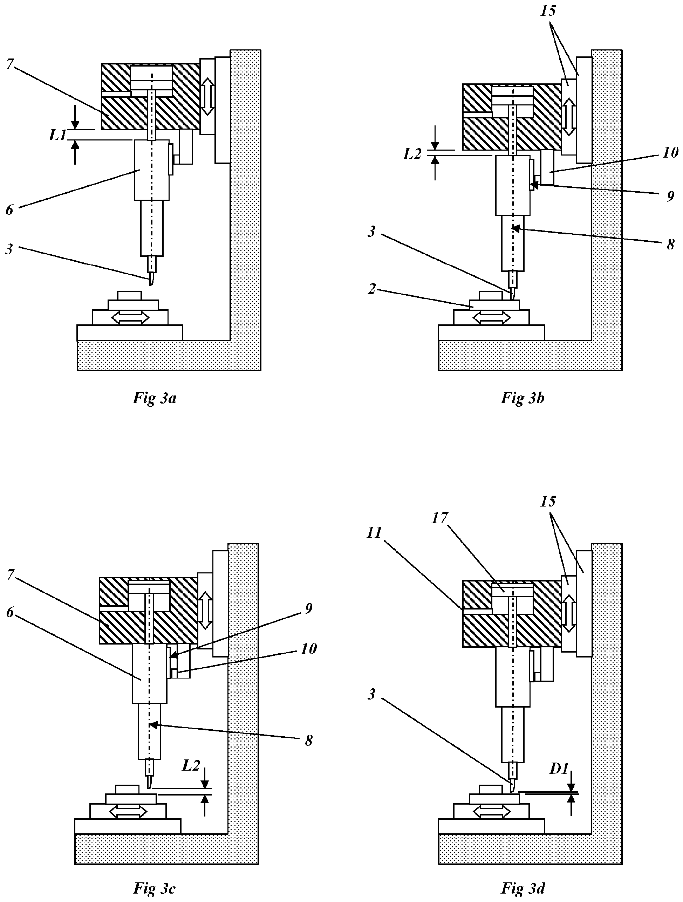

Figs. 3a to 3b show a schematic representation of the inventions sequence of operation in achieving the precise step back. The sequence of operation is Fig3a then Fig3b then Fig3c and lastly Fig3d where the tool is then at the required step back distance.

In Fig 3a tool 3 is not at the required step back height D1, it is at rest together with all other components related to the invention. It can be seen that there is clearance L1 between housing 6 and movable rigid body 7.

In Fig 3b stage 15 has driven tool 3 and the components that connect it to the stage along the axis of line 8 such that tool 3 collides with base 2. The contact between the tool 3 and base 2 causing distance L1 to be reduced to L2. The resulting movement between housing 6 and movable rigid body 7 is detected by sensor 9,10. The contact between tool 3 and base 2 can be detected by any means but in a preferred embodiment it is detected by sensor 9,10. On detecting contact between the tool 3 and base 2 sensor 9,10 records its measured position, stage 15 can also be instructed to stop. It is preferable that the means of detecting contact between the tool and base together with the mass and speed of moving components is designed so that no damage is done to the tool or base.

In Fig 3c housing 6 is clamped to movable rigid body 7 by moving along the axis of line 8 until the previously shown L2 is reduce to zero. As in the preferred embodiment previously mentioned this would be achieved by supplying compressed air to port 11 such that piston 17 provides the clamping movement and a clamping force. The movement of housing 6 relative to movable rigid body 7 is detected and recorded by sensor 9,10. The difference in the positions of sensor 9,10 in the steps shown in Fig3b and Fig3c will be the distance parallel to the axis of line 8 now separating tool 3 and base 2.

In Fig 3d tool 3 is driven by stage 15 to the required step back distance, the distance stage 15 moves being L2 less D1. In these illustrations D1 is less than L2 so the tool has moved closer to the base. If the required D1 is larger than L2 within the convention of these illustrations the move distance would be negative such that the tool would move away from the base.

## Claims

1. A bond tester apparatus arranged for determining a strength of a bond and/or a material present on a base (2), said bond tester apparatus comprising:
1) a frame (14)
2) a force measurement module (3, 4, 6), comprising:
- a shear tool (3) arranged for applying a shear force to said bond and/or said material, the shear tool (3) movable in a vertical direction (16) through a stage (15) fixed to the frame (14);
3) a displacement module (7, 17), comprising:
- a movable rigid body (7), movable in a vertical direction (16) through said stage (15);
**characterised, by**
- a movable member (17) movably connecting said force measurement module (3, 4, 6) to said movable rigid body (7), thereby providing a vertical displacement distance (L1) between said rigid body (7) and said force measurement module (3, 4, 6), the movable member (17) movable with respect to the movable rigid body (7) in a vertical direction (16) so that the vertical displacement distance (L1) may be reduced;
- a displacement sensor (9, 10) arranged for measuring said vertical displacement distance (L1);
4) a controller arranged for:
- monitoring said measured vertical displacement distance (L1);
- moving said rigid body (7), and thereby also said force measurement module (3, 4, 6), towards said base (2) until said shear tool (3) comes in contact with said base (2) thereby reducing the vertical displacement distance (L1) to a vertical contact displacement distance (L2);
- controlling said movable member (17) to clamp said force measurement module (3, 4, 6) to said movable rigid body (7) such that a vertical distance (L2) between said base (2) and said shear tool (3) is said vertical contact displacement distance (L2);
- moving said rigid body (7), and thereby also said force measurement module (3, 4, 6), to set a shear height (D1) of said shear tool (3), based on said contact displacement distance (L2).

2. A bond tester apparatus in accordance with claim 1, wherein said force measurement module (3, 4, 6) further comprises a shear sensor (4), connected to said shear tool (3), and arranged for measuring said applied shear force.

3. A bond tester apparatus in accordance with any of the previous claims, wherein said displacement sensor (9, 10) comprises a linear encoder with grating (9) and reading head (10).

4. A bond tester apparatus in accordance with any of the previous claims, wherein said movable member comprises:
- a piston (17) connected, at one end, to said force measurement module (3, 4, 6);
- an, in use, vertically expandable chamber, wherein said piston (17) is connected, at another end, to an expandable part of said chamber;
- an inlet/outlet port (11) for introducing, and removing, a fluid in, from, said expandable chamber for expanding, and shrinking, said expandable chamber, thereby controlling said displacement distance (L1) between said displacement module (7, 17) and said force measurement module (3, 4, 6).

5. A bond tester apparatus in accordance with any of the previous claims, wherein said controller is arranged to detect that said shear tool (3) comes in contact with said base (2) by monitoring a reduction in said measured vertical displacement distance (L1).

6. A method for determining a strength of a bond and/or a material present on a base (2) using a bond tester apparatus in accordance with any of the previous claims, wherein said method comprises the steps of:
- monitoring, by said controller, said measured vertical displacement distance (L1);
- moving, by said controller, said rigid body (7), and thereby also said force measurement module (3, 4, 6), downwards until said shear tool (3) comes in contact with said base (2) thereby reducing the vertical displacement distance (L1) to a vertical contact displacement distance (L2);
- controlling, by said controller, said movable member (17) to clamp said force measurement module (3, 4, 6) to said movable rigid body (7) such that a vertical distance (L2) between said base (2) and said shear tool (3) is said vertical contact displacement distance (L2);
- moving, by said controller, said rigid body (7), and thereby also said force measurement module (3, 4, 6), to set a shear height (D1) of said shear tool (3), based on said contact displacement distance (L2).

7. A method in accordance with claim 6 in combination with claim 4, wherein said step of controlling comprises:
- introducing, or removing, said fluid in, or from, said expandable chamber.

8. A method in accordance with any of the claims 6-7, wherein said step of moving said rigid body (7) downward comprises:
- detecting that said shear tool (3) comes in contact with said base (2) by monitoring a reduction in said measured vertical displacement distance (L1).

## Patentansprüche

1. Bondtestervorrichtung, die zum Bestimmen einer Festigkeit einer Haftung und/oder eines auf einer Basis (2) vorhandenen Materials angeordnet ist, wobei die Bondtestervorrichtung Folgendes umfasst:
1) einen Rahmen (14)
2) ein Kraftmessmodul (3, 4, 6), das Folgendes umfasst:
- ein Scherwerkzeug (3), das zum Aufbringen einer Scherkraft auf die Haftung und/oder das Material angeordnet ist, wobei das Scherwerkzeug (3) in eine vertikale Richtung (16) über eine am Rahmen (14) befestigte Stufe (15) bewegbar ist;
3) ein Versatzmodul (7, 17), das Folgendes umfasst:
- einen bewegbaren starren Körper (7), der in eine vertikale Richtung (16) über die Stufe (15) bewegbar ist;
**gekennzeichnet durch**
- ein bewegbares Element (17), das das Kraftmessmodul (3, 4, 6) bewegbar mit dem bewegbaren starren Körper (7) verbindet, wodurch zwischen dem starren Körper (7) und dem Kraftmessmodul (3, 4, 6) ein vertikaler Versatzweg (L1) bereitgestellt wird, wobei das bewegbare Element (17) mit Bezug auf den bewegbaren starren Körper (7) in eine vertikale Richtung (16) bewegbar ist, derart, dass der vertikale Versatzweg (L1) reduziert werden kann;
- einen Versatzsensor (9, 10), der zum Messen des vertikalen Versatzwegs (L1) angeordnet ist;
4) eine Steuerung, die zu Folgendem angeordnet ist:
- Überwachen des gemessenen vertikalen Versatzwegs (L1);
- Bewegen des starren Körpers (7) und dadurch auch des Kraftmessmoduls (3, 4, 6) zur Basis (2), bis das Scherwerkzeug (3) mit der Basis (2) in Kontakt kommt, wodurch der vertikale Versatzweg (L1) auf einen vertikalen Kontaktversatzweg (L2) reduziert wird;
- Steuern des bewegbaren Elements (17), um das Kraftmessmodul (3, 4, 6) am bewegbaren starren Körper (7) festzuklemmen, derart, dass ein vertikaler Weg (L2) zwischen der Basis (2) und dem Scherwerkzeug (3) der vertikale Kontaktversatzweg (L2) ist;
- Bewegen des starren Körpers (7) und dadurch auch des Kraftmessmoduls (3, 4, 6), um eine Scherhöhe (D1) des Scherwerkzeugs (3) auf Basis des Kontaktversatzwegs (L2) einzustellen.

2. Bondtestervorrichtung nach Anspruch 1, wobei das Kraftmessmodul (3, 4, 6) ferner einen Schersensor (4) umfasst, der mit dem Scherwerkzeug (3) verbunden und zum Messen der aufgebrachten Scherkraft angeordnet ist.

3. Bondtestervorrichtung nach einem der vorhergehenden Ansprüche, wobei der Versatzsensor (9, 10) einen linearen Codierer mit Gitter (9) und einem Lesekopf (10) umfasst.

4. Bondtestervorrichtung nach einem der vorhergehenden Ansprüche, wobei das bewegbare Element Folgendes umfasst:
- einen Kolben (17), der an einem Ende mit dem Kraftmessmodul (3, 4, 6) verbunden ist;
- eine im Gebrauch vertikal ausdehnbare Kammer, wobei der Kolben (17) an einem anderen Ende mit einem ausdehnbaren Teil der Kammer verbunden ist;
- einen Einlass-/Auslassanschluss (11) zum Einleiten eines Fluids in die ausdehnbare Kammer und Entfernen desselben aus dieser zum Ausdehnen und Schrumpfen der ausdehnbaren Kammer, wodurch der Versatzweg (L1) zwischen dem Versatzmodul (7, 17) und dem Kraftmessmodul (3, 4, 6) gesteuert wird.

5. Bondtestervorrichtung nach einem der vorhergehenden Ansprüche, wobei die Steuerung angeordnet ist, durch Überwachen einer Reduzierung des gemessenen vertikalen Versatzwegs (L1) zu detektieren, dass das Scherwerkzeug (3) mit der Basis (2) in Kontakt kommt.

6. Verfahren zum Bestimmen einer Festigkeit einer Haftung und/oder eines auf einer Basis (2) vorhandenen Materials unter Verwendung einer Bondtestervorrichtung nach einem der vorhergehenden Ansprüche, wobei das Verfahren die folgenden Schritte umfasst:
- Überwachen des gemessenen vertikalen Versatzwegs (L1) durch die Steuerung;
- Bewegen des starren Körpers (7) und dadurch auch des Kraftmessmoduls (3, 4, 6) durch die Steuerung nach unten, bis das Scherwerkzeug (3) mit der Basis (2) in Kontakt kommt, wodurch der vertikale Versatzweg (L1) auf einen vertikalen Kontaktversatzweg (L2) reduziert wird;
- Steuern des bewegbaren Elements (17) durch die Steuerung, um das Kraftmessmodul (3, 4, 6) am bewegbaren starren Körper (7) festzuklemmen, derart, dass ein vertikaler Weg (L2) zwischen der Basis (2) und dem Scherwerkzeug (3) der vertikale Kontaktversatzweg (L2) ist;
- Bewegen des starren Körpers (7) und dadurch auch des Kraftmessmoduls (3, 4, 6) durch die Steuerung, um eine Scherhöhe (D1) des Scherwerkzeugs (3) auf Basis des Kontaktversatzwegs (L2) einzustellen.

7. Verfahren nach Anspruch 6 in Kombination mit Anspruch 4, wobei der Schritt des Steuerns Folgendes umfasst:
- Einleiten des Fluids in die ausdehnbare Kammer oder Entfernen desselben aus dieser.

8. Verfahren nach einem der Ansprüche 6-7, wobei der Schritt des Bewegens des starren Körpers (7) nach unten Folgendes umfasst:
- Detektieren durch Überwachen einer Reduzierung des gemessenen vertikalen Versatzwegs (L1), dass das Scherwerkzeug (3) mit der Basis (2) in Kontakt kommt.

## Revendications

1. Appareil de test de liaison adapté pour déterminer une résistance d'une liaison et/ou d'un matériau présent sur une base (2), ledit appareil de test de liaison comprenant :
1) un châssis (14)
2) un module de mesure de force (3, 4, 6), comprenant :
- un outil de cisaillement (3) adapté pour appliquer une force de cisaillement à ladite liaison et/ou audit matériau, l'outil de cisaillement (3) mobile selon une direction verticale (16) à travers un plateau (15) fixé au châssis (14) ;
3) un module de déplacement (7, 17), comprenant :
- un corps rigide mobile (7), mobile selon une direction vertical (16) à travers ledit plateau (15) ;
**caractérisé, par**
- un organe mobile (17) reliant ledit module de mesure de force (3, 4, 6) en mouvement audit corps rigide mobile (7), donnant ainsi une distance de déplacement vertical (L1) entre ledit corps rigide (7) et ledit module de mesure de force (3, 4, 6), l'organe mobile (17) mobile par rapport au corps rigide mobile (7) selon une direction verticale (16) de telle sorte que la distance de déplacement verticale (L1) puisse être réduite ;
- un capteur de déplacement (9, 10) adapté pour mesurer ladite distance de déplacement vertical (L1) ;
4) un contrôleur adapté pour :
- surveiller ladite distance de déplacement vertical mesurée (L1) ;
- déplacer ledit corps rigide (7), et ainsi ledit module de mesure de force (3, 4, 6), vers ladite base (2) jusqu'à ce que ledit outil de cisaillement (3) entre en contact avec ladite base (2) réduisant ainsi la distance de déplacement vertical (L1) à une distance de déplacement vertical de contact (L2) ;
- commander ledit organe de déplacement (17) pour serrer ledit module de mesure de force (3, 4, 6) audit corps rigide mobile (7) de sorte qu'une distance verticale (L2) entre ladite base (2) et ledit outil de cisaillement (3) soit ladite distance de déplacement vertical de contact (L2) ;
- déplacer ledit corps rigide (7), et ainsi ledit module de mesure de force (3, 4, 6), pour régler une hauteur de cisaillement (D1) dudit outil de cisaillement (3), sur la base de ladite distance de déplacement de contact (L2).

2. Appareil de test de liaison selon la revendication 1, dans lequel ledit module de mesure de force (3, 4, 6) comprend en outre un capteur de cisaillement (4), connecté audit outil de cisaillement (3), et adapté pour mesurer ladite force de cisaillement appliquée.

3. Appareil de test de liaison selon l'une quelconque des revendications précédentes, dans lequel ledit capteur de déplacement (9, 10) comprend un codeur linéaire avec un réseau (9) et une tête de lecture (10).

4. Appareil de test de liaison selon l'une quelconque des revendications précédentes, dans lequel ledit organe de déplacement comprend :
- un piston (17) relié, à une extrémité, audit module de mesure de force (3, 4, 6) ;
- une chambre dilatable verticalement, en utilisation, dans laquelle ledit piston (17) est relié, à une autre extrémité, à une partie dilatable de ladite chambre;
- un port d'entrée/sortie (11) pour introduire, et retirer, un fluide dans, depuis, ladite chambre dilatable pour dilater, et rétrécir, ladite chambre dilatable, contrôlant ainsi ladite distance de déplacement (L1) entre ledit module de déplacement (7, 17) et ledit module de mesure de force (3, 4, 6).

5. Appareil de test de liaison selon l'une quelconque des revendications précédentes, dans lequel ledit contrôleur est agencé pour détecter que ledit outil de cisaillement (3) entre en contact avec ladite base (2) en surveillant une réduction de ladite distance de déplacement vertical mesurée (L1).

6. Procédé pour déterminer la résistance d'une liaison et/ou d'un matériau présent sur une base (2) en utilisant un appareil de test de liaison selon l'une quelconque des revendications précédentes, dans lequel ledit procédé comprend les étapes consistant à :
- surveiller, par ledit contrôleur, ladite distance de déplacement vertical mesurée (L1) ;
- déplacer, par ledit contrôleur, ledit corps rigide (7), et ainsi ledit module de mesure de force (3, 4, 6), vers le bas jusqu'à ce que ledit outil de cisaillement (3) entre en contact avec ladite base (2) réduisant ainsi la distance de déplacement vertical (L1) à une distance de déplacement vertical de contact (L2) ;
- commander, par ledit contrôleur, ledit organe de déplacement (17) pour serrer ledit module de mesure de force (3, 4, 6) audit corps rigide mobile (7) de telle sorte qu'une distance verticale (L2) entre ladite base (2) et ledit outil de cisaillement (3) soit ladite distance de déplacement vertical de contact (L2) ;
- déplacer, par ledit contrôleur, ledit corps rigide (7), et ainsi ledit module de mesure de force (3, 4, 6), pour régler une hauteur de cisaillement (D1) dudit outil de cisaillement (3), sur la base de ladite distance de déplacement de contact (L2).

7. Procédé selon la revendication 6 en combinaison avec la revendication 4, dans lequel ladite étape de contrôle comprend :
- introduire, ou retirer, ledit fluide dans, ou depuis, ladite chambre dilatable.

8. Procédé selon l'une quelconque des revendications 6-7, dans lequel ladite étape de déplacement dudit corps rigide (7) vers le bas comprend :
- détecter que ledit outil de cisaillement (3) vient en contact avec ladite base (2) en surveillant une réduction de ladite distance de déplacement vertical mesurée (L1).
